# EUROPÄISCHE PATENTSCHRIFT

(11) **EP 1 638 174 B1**
(45) Veröffentlichungstag und Bekanntmachung des Hinweises auf die Patenterteilung: **17.02.2016**
(21) Anmeldenummer: 05019521.3
(22) Anmeldetag: 08.09.2005
(51) Int. Cl.: H01R 13/72, B60D 1/62, B62D 53/12, B65H 75/42, B65H 75/44, H02G 11/02

(54) **Leitungsspeicher**
Cable storage
Stockage de câble

(30) Priorität: 16.09.2004 DE 102004044992
(43) Veröffentlichungstag der Anmeldung: 22.03.2006
(73) Patentinhaber: Jost-Werke GmbH, 63263 Neu-Isenburg (DE)
(72) Erfinder: Algüera, José Manuel Gallego, 63739 Aschaffenburg (DE); Richter, Ernst Martin, 60316 Frankfurt am Main (DE); Eiermann, Michael, D-64319 Pfungstadt (DE)
(74) Vertreter: Mehler Achler

(56) Entgegenhaltungen:
- DE-A1- 10 155 056
- DE-C- 817 556
- DE-C- 955 334
- JP-A- 2000 085 639
- US-A- 3 773 987
- US-A- 4 417 703
- US-A- 5 129 828
- US-B1- 6 616 080

## Beschreibung

Die Erfindung betrifft einen Leitungsspeicher für eine Versorgungsleitung an einem Sattelauflieger mit einem Königszapfen und einem an dem Königszapfen schwenkbar gelagerten Steckerkeil.

Das Ankuppeln eines Sattelaufliegers an einem Zugfahrzeug erfolgt in der Regel durch ein Zurückfahren des Zugfahrzeuges unter den Sattelauflieger, wodurch ein auf der Unterseite des Sattelaufliegers angeordneter Königszapfen mit einer auf dem Zugfahrzeug befindlichen Sattelkupplung in Eingriff gebracht und anschließend verriegelt wird. Zum Abkuppeln wird der Auflieger in bekannter Weise abgestellt, die Sattelkupplung geöffnet und das Zugfahrzeug vorgefahren. Zur Optimierung der Arbeitsbedingungen von Fernfahrern gibt es Bestrebungen, das An- und Abkuppeln des Sattelaufliegers und des Zugfahrzeuges zu automatisieren beziehungsweise diesen Vorgang aus dem Führerhaus des Zugfahrzeuges fernzusteuern. In Zusammenhang mit derartigen fernsteuerbaren Sattelkupplungen existieren bereits auch Systeme, die das Verbinden von Versorgungsleitungen zwischen Zugfahrzeug und Sattelauflieger automatisiert zusammen mit dem An- und Abkuppeln des Sattelaufliegers vornehmen. Unter Versorgungsleitungen werden in erster Linie Kabel zur Übertragung von elektrischer Energie aber auch pneumatische oder auch hydraulische Leitungen verstanden.

Ein bewährtes System zum Verbinden der Versorgungsleitungen durch ein Ankuppeln des Aufliegers umfasst einen schwenkbar an dem Königszapfen gelagerten Steckerkeil entsprechend der DE 101 55 056 A1, der sich beim Einfahren des Königszapfens in die Sattelkupplung in die keilförmig zulaufende Einfahröffnung einfügt, dort Steckkontakten gegenüberliegt und eine Kontaktierung ermöglicht. Bei Kurvenfahrten des Zugfahrzeugs wird der Steckerkeil in der Einfahröffnung formschlüssig fixiert und dreht gegenüber dem Auflieger. Aus diesem Grund ist es notwendig, die Versorgungsleitung aufliegerseitig in einer ausreichenden Länge bereitzustellen, um ein Abreißen der Versorgungsleitung zwischen dem Steckerkeil und dem Sattelauflieger auch bei enger Kurvenfahrt zu vermeiden. Der wesentliche und zu Systemausfällen führende Nachteil besteht darin, dass es bei Geradeausfahrt zu einem Durchhängen und einem damit verbundenen Risiko von Beschädigungen oder einem Abreißen der Versorgungsleitung kommt.

Um Beschädigungen an Verbindungsleitungen zwischen einem Zugfahrzeug und einem Auflieger zu vermeiden, sind aus dem Stand der Technik bereits so genannte Leitungsspeicher bekannt, die mit Hilfe einer federvorgespannten Kabeltrommel die Verbindungsleitung unter Zugspannung halten. Ein derartiger Leitungsspeicher ist beispielsweise in der DE 817 556 B offenbart und umfasst ein Gehäuse mit einer darin drehbar auf einer Hohlachse gelagerten Kabeltrommel. Die Verbindungsleitung wird in nicht angekuppeltem Zustand bis zu einem Anstoßen des Steckers an dem Gehäuse aufgewickelt. Der auf der Kabeltrommel aufgewickelte Teil ist mit einem durch die Hohlachse herausgeführten ortsfesten Kabelabschnitt über ein an beide Teile angeschlossenes Flachkabel verbunden. Diese Konstruktion hat sich jedoch unter der alltäglichen Belastung nicht als zuverlässig herausgestellt, da insbesondere die Verwendung von drei Kabelabschnitten mit zwei Verbindungsstellen zu Brüchen der Verbindung geführt hat.

Aus diesem Grund lag der Erfindung die Aufgabe zugrunde, einen robusten Leitungsspeicher bereitzustellen, der auf mechanisch einfache Weise ein Durchhängen der Versorgungsleitung verhindert und andererseits für eine stetige Vorspannung der Versorgungsleitung sorgt.

Die Aufgabe wird erfindungsgemäß mit einer Anordnung eines Leitungsspeichers nach Anspruch 1 gelöst, wobei dieser Leitungsspeicher ein Gehäuse und eine in dem Gehäuse drehbar gelagerte Trommelscheibe umfasst, wobei die Trommelscheibe über ein Federelement vorgespannt ist und die Versorgungsleitung mit ihrem vorderen Leitungsabschnitt an dem Steckerkeil angreift und mit ihrem hinteren Leitungsabschnitt ortsfest aus dem Gehäuse herausgeführt ist.

Bei Geradeausfahrt befindet sich die Versorgungsleitung in einem weitgehend eingerollten Zustand auf der Trommelscheibe, so dass die Versorgungsleitung einerseits gegen Beschädigungen hervorragend geschützt ist und andererseits die Vorspannung der Trommelscheibe ein Abwickeln der Versorgungsleitung bei einer Kurvenfahrt und einem Ausschwenken des Sattelaufliegers gegenüber der Zugmaschine erlaubt. Darüber hinaus befindet sich die Versorgungsleitung derart unter Spannung, dass bei einem Zurückschwenken des Sattelaufliegers am Ende der Kurvenfahrt keine Gefahr besteht, dass Teile der Versorgungsleitung zwischen dem Zugfahrzeug und dem Auflieger gequetscht werden.

Ein weiterer Vorteil des Leitungsspeichers liegt darin, dass der Steckerkeil auch bei Fahrten ohne Sattelauflieger aufgrund der Vorspannung der Versorgungsleitung stets in einer einfahrbereiten Stellung ausgerichtet ist. Dieses schließt das Risiko aus, bei einem erneuten Ankuppeln eines Sattelaufliegers mit der Sattelkupplung beziehungsweise deren keilförmiger Einfahröffnung vor einen falsch ausgerichteten Steckerkeil zu fahren und diesen dadurch zu zerstören.

Aufgrund der flachen Ausbildung der Trommelscheibe kann der Leitungsspeicher insgesamt sehr flachbauend ausgeführt sein und dadurch zusammen mit dem Sattelauflieger bei Kurvenfahrten über das hintere Ende des Zugfahrzeugs hinwegschwenken.

Die oben stehende konstruktive Ausgestaltung weist eine einstückig durchgehende Versorgungsleitung auf, die sich von dem Steckerkeil bis zum Verlassen des Gehäuses beziehungsweise bis zu den Verbrauchern des Sattelaufliegers erstreckt. Hierdurch wird die betriebliche Verfügbarkeit gegenüber Systemen, die auf einer Drehübertragung beispielsweise mit Kontaktringen und Schleifbürsten basieren, erheblich gesteigert. Die letztgenannten sind aufgrund ihrer hohen Störanfälligkeit, hervorgerufen insbesondere durch eine feuchtigkeitsbedingte Korrosion, für einen Einsatz an der exponierten Position unter einem Sattelauflieger ungeeignet.

Günstigerweise ist an dem radial äußeren Ende der Trommelscheibe ein Trommelmantel ausgeformt, auf welchen der vordere Leitungsabschnitt aufgelegt ist. Dieser Trommelmantel dient sowohl der Führung als auch der Aufnahme des aus dem Leitungsspeicher herausziehbaren vorderen Leitungsabschnitts.

Der hintere Leitungsabschnitt dagegen kann spiralartig auf die Trommelscheibe gelegt sein. Hierbei ist es besonders vorteilhaft, wenn der Trommelmantel einen Manteldurchbruch aufweist und die Versorgungsleitung an dem Manteldurchbruch ortsfest an der Trommelscheibe und/oder dem Trommelmantel befestigt ist. Bei dieser Ausführungsform wird die Versorgungsleitung durch die im Bereich des Manteldurchbruchs angeordnete Befestigung in einen vorderen Leitungsabschnitt, der vom Steckerkeil bis zu der Befestigung reicht, und einen hinteren Leitungsabschnitt, der von der Befestigung bis aus dem Gehäuse heraus reicht, unterteilt.

Der vordere Leitungsabschnitt kann als Mehrfachwicklung auf den Trommelmantel aufgelegt sein. Bei den in der Praxis benötigten Ausziehlängen des vorderen Leitungsabschnitts haben sich 2 bis 3 übereinander liegende Wicklungen bewährt. Aufgrund der Mehrfachwicklung wird eine minimale Höhe des Trommelmantels benötigt.

Um ein gleichmäßiges Auf- und Abwickeln des vorderen Leitungsabschnitts der Versorgungsleitung zu gewährleisten, sollte der Trommelmantel in Umfangsrichtung vollständig die Trommelscheibe umgeben.

Eine präzise Führung des vorderen Leitungsabschnitts wird erreicht, wenn der Trommelmantel als Rillenprofil, insbesondere als U-Profil, ausgebildet ist. Das U-Profil ist hinsichtlich seiner Form komplementär zu dem Querschnitt der Versorgungsleitung ausgeformt und schont damit den vorderen Leitungsabschnitt im Kontaktbereich zu dem Trommelmantel.

Das Rillenprofil oder das U-Profil sollte eine Öffnungsweite aufweisen, die geringfügig größer als der Durchmesser der Versorgungsleitung gewählt ist. Hierdurch werden Überläufer beim Aufwickeln vermieden.

Zur Aufnahme mehrerer übereinander liegender Wicklungen muss das Rillenprofil oder das U-Profil eine Tiefe aufweisen, die mindestens der Summe der Durchmesser der auf dem Trommelmantel aufliegenden Anzahl Wicklungen entspricht. Bevorzugt sollte die Profiltiefe mindestens dem doppelten Durchmesser der Versorgungsleitung entsprechen.

Vorteilhafterweise ist das Federelement eine Spiralfeder. Diese kann in einem Federraum angeordnet sein, der von der Versorgungsleitung durch die Trommelscheibe abgegrenzt ist. Aus dieser Anordnung ergibt sich, dass auf der Trommelscheibe die Versorgungsleitung, beispielsweise dessen hinterer Leitungsabschnitt, und unterhalb der Trommelscheibe die Spiralfeder angeordnet ist. In einer alternativen Ausführungsform kann auch die Spiralfeder auf der Trommelscheibe angeordnet sein und die Versorgungsleitung auf der Innenseite des Gehäuses unterhalb der Trommelscheibe liegen.

In einer günstigen Ausführungsform ist die Spiralfeder mit ihrem ersten Ende ortsfest an dem Gehäuse befestigt und greift mit ihrem zweiten Ende an der Trommelscheibe und/oder dem Trommelmantel an. Besonders vorteilhaft ist es, wenn das erste Ende in radialer Richtung außen an dem Gehäuse befestigt ist und das zweite Ende innen an der Trommelscheibe angreift.

Eine stabile Ausgestaltung des Leitungsspeichers lässt sich realisieren, in dem die Trommelscheibe an einem ortsfest in dem Gehäuse stehenden Domlager gelagert ist. Das Domlager kann sich dann vollständig durch das Gehäuse erstrecken und das Gehäuse dadurch stabilisieren sowie eine stabile Lagerung der Trommelscheibe ermöglichen.

Die Erfindung wird zum besseren Verständnis anhand der nachfolgenden acht Zeichnungsfiguren näher erläutert. Dabei zeigen die
- **Fig. 1:**: eine Unteransicht auf den Leitungsspeicher;
- **Fig. 2:**: eine Draufsicht auf den Leitungsspeicher mit abgenommenem Gehäusedeckel;
- **Fig. 3:**: einen Querschnitt längs der Schnittlinie A-A gemäß Fig. 2;
- **Fig. 4:**: einen vergrößerten Ausschnitt Z gemäß Fig. 3;
- **Fig. 5:**: einen Querschnitt längs der Schnittlinie C-C gemäß Fig. 2;
- **Fig. 6:**: einen Vergrößerten Ausschnitt gemäß Fig. 5;
- **Fig. 7:**: eine Draufsicht auf eine Trommelscheibe ohne Versorgungsleitung und
- **Fig. 8:**: einen Querschnitt auf die Trommelscheibe längs der Schnittlinie A-A in Fig. 7.

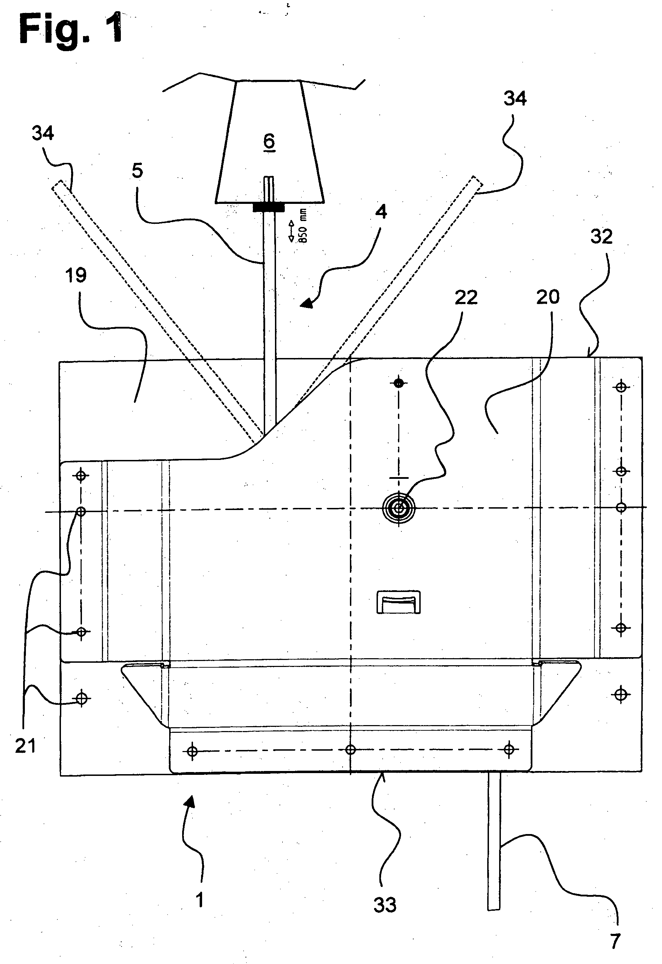

Die Figur 1 zeigt eine Unteransicht auf das Gehäuse 1 des Leitungsspeichers mit einer teilweise herausragenden Versorgungsleitung 4, die zur Aufnahme einer Zugbelastung ausgelegt ist. Dieses kann beispielsweise bei Kabeln über einen Zugkräfte aufnehmenden Mantel realisiert werden. Das Gehäuse 1 setzt sich aus der Gehäusewanne 20 und dem damit verschraubten Gehäusedeckel 19 zusammen. In der Unteransicht der Figur 1 ist der Gehäusedeckel 19 in drei Eckbereichen sichtbar. Zur Befestigung des Leitungsspeichers an der Unterseite eines nicht gezeigten Aufliegers weist das Gehäuse 1 an zwei gegenüberliegenden Seiten und an der Hinterseite 33 Befestigungslöcher 21 auf, die sich durchgehend durch den Gehäusedeckel 19 und die Gehäusewanne 20 erstrecken.

In Richtung der Vorderseite 32 ist ein vorderer Leitungsabschnitt 5 in einer teilweise aus dem Gehäuse 1 herausgezogenen Position zu erkennen. Am Ende des vorderen Leitungsabschnitts 5 ist ein trapezartig zulaufender Steckerkeil 6 angebracht, der in eine komplementär ausgeformte Einfahröffnung einer Sattelkupplung eingefahren werden kann und dadurch beispielsweise eine elektrische Verbindung ermöglicht. Der vordere Leitungsabschnitt 5 ist in den Steckerkeil 6 eingeführt und zugfest an diesem befestigt.

Bei einer Kurvenfahrt des nicht gezeigten Zugfahrzeuges kommt es zu einem Ausschwenken des Aufliegers gegenüber dem Zugfahrzeug. In diesem Fall kann der Steckerkeil 6 mitschwenken und der vordere Leitungsabschnitt 5 wird aus dem Gehäuse 1 herausgezogen. Der maximale Ausziehweg beträgt bei dem gezeigten Leitungsspeicher 850 mm. Beispielhaft sind mit gestrichelten Linien zwei Ausschwenkstellungen 34 des vorderen Leitungsabschnitts 5 dargestellt.

Auf der Hinterseite 33 des Gehäuses 1 ist der hintere Leitungsabschnitt 7 der Versorgungsleitung 4 aus dem Gehäuse 1 herausgeführt. Dieser hintere Leitungsabschnitt 7 ist entkoppelt von Ein- und Ausziehbewegungen des vorderen Leitungsabschnitts 5. Der hintere Leitungsabschnitt 7 kann deshalb auf einfache Weise mit auf dem Sattelauflieger vorhandenen ortsfest verlegten Leitungen verbunden werden.

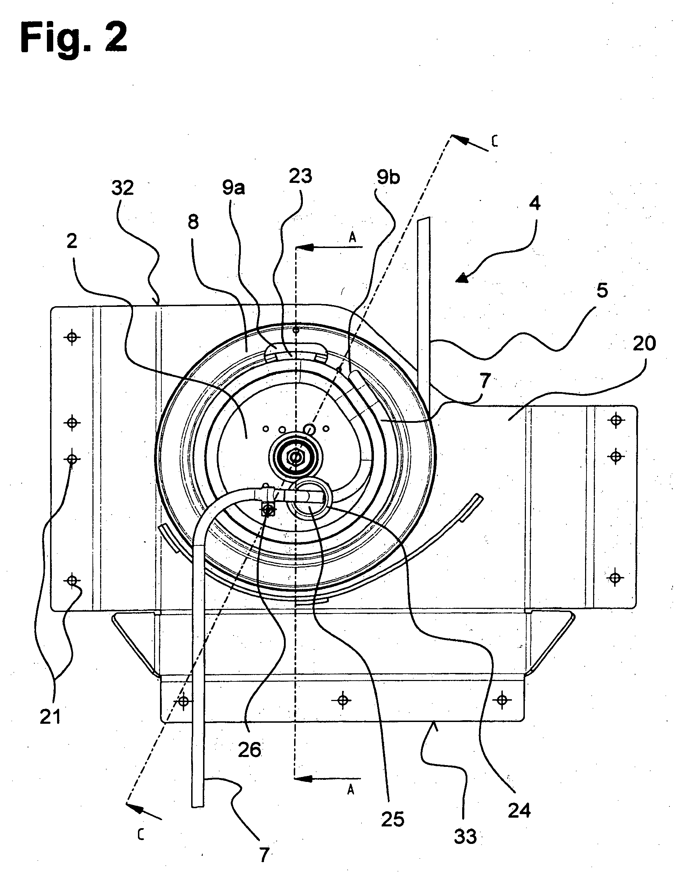

Die Figur 2 zeigt eine Draufsicht auf den Leitungsspeicher mit abgenommenem Gehäusedeckel 19. In einem mittleren Bereich der Gehäusewanne 20 befindet sich eine drehbar gelagerte Trommelscheibe 2 auf der die Versorgungsleitung 4 teilweise aufgewickelt ist. Auf der Vorderseite 32 tritt der vordere Leitungsabschnitt 5 der Versorgungsleitung 4 tangential aus einem Trommelmantel 8 heraus. Der Trommelmantel 8 ist an dem radialen äußeren Ende der Trommelscheibe 2 ausgeformt und dient ausschließlich der Aufnahme des vorderen Leitungsabschnitts 5. Bei dem in der Figur 2 dargestellten Leitungsspeicher ist der vordere Leitungsabschnitt 5 weitgehend aufgewickelt.

Der vordere Leitungsabschnitt 5 ist in der Draufsicht im Uhrzeigersinn auf den Trommelmantel 8 aufgelegt und in dem Manteldurchbruch 9a erkennbar. Unmittelbar innerhalb des Manteldurchbruchs 9a befindet sich eine Leitungsbefestigung 23, welche die Versorgungsleitung 4 ortsfest zu der Trommelscheibe 2 fixiert. In einem zweiten Manteldurchbruch 9b stößt die Versorgungsleitung 4 durch den Trommelmantel 8 hindurch und ist im gleichen Wickelsinn wie im Trommelmantel 8 auf der Trommelscheibe 2 spiralartig abgelegt. Der hintere Leitungsabschnitt 7 ist nach innen ca. zweimal spiralartig aufgedreht und tritt nach oben durch eine Gehäusedurchführung 25 durch den in der Figur 2 nicht gezeigten Gehäusedeckel 19 hindurch.

Ausgehend von dieser Leitungsbefestigung 23 wird die Versorgungsleitung 4 in den vorderen Leitungsabschnitt 5, der auf dem Trommelmantel 8 aufliegt und zumindest teilweise aus dem Gehäuse 1 (s. Figur 1) ein- und ausgezogen werden kann, und in den hinteren Leitungsabschnitt 7 unterteilt, der auf der Trommelscheibe 2 liegt und nach außen ortsfest aus dem Gehäuse 1 (s. Figur 1) herausgeführt ist.

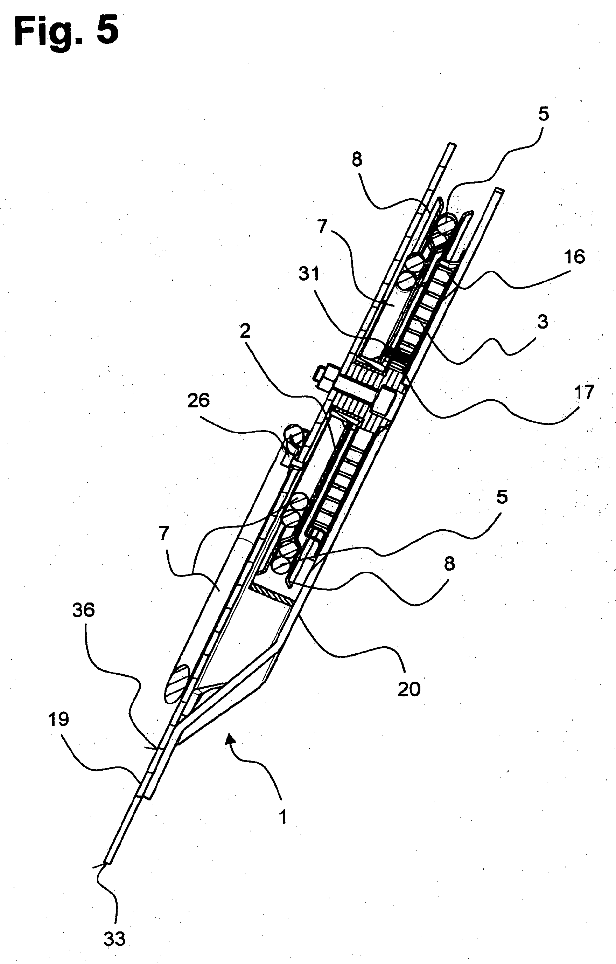

Zur Abdichtung und um Beschädigungen an dem hinteren Leitungsabschnitt 7 durch Scheuerstellen im Bereich der Gehäusedurchführung 25 zu vermeiden, ist in die Gehäusedurchführung 25 eine Gummimuffe 24 eingesetzt. Darüber hinaus ist der hintere Leitungsabschnitt 7 auf dem Gehäusledeckel 19 (s. auch Figur 5) mit einer Halteschelle 26 befestigt.

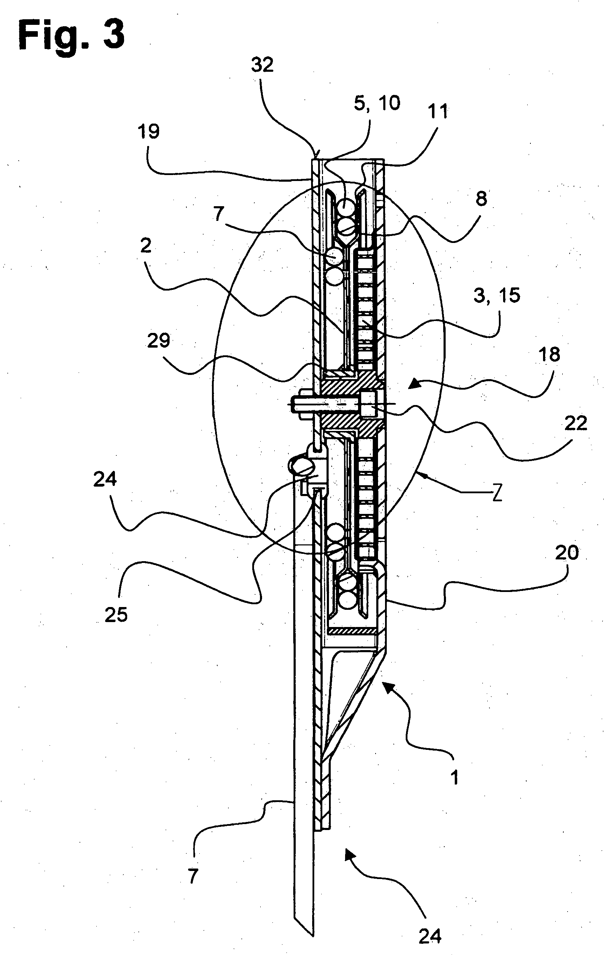

Die Figur 3 zeigt einen Querschnitt längs der in Figur 2 eingezeichneten Schnittlinie A-A. Das Gehäuse 1 setzt sich aus der Gehäusewanne 20 und dem darauf befestigten Gehäusedeckel 19 zusammen, wobei das Gehäuse 1 auf seiner Vorderseite 32 geöffnet ist und dadurch ein Schwenken des vorderen Leitungsabschnitts 5 entsprechend der Relativbewegung des Steckerkeils 6 (s. Figur 1) zulässt.

In dem äußeren Bereich der Trommelscheibe 2 ist der mit einem gabelartigen Rillenprofil 11 geformte Trommelmantel 8 zu sehen, der in Umfangsrichtung vollständig die Trommelscheibe 2 umgibt. Der Trommelmantel 8 nimmt den vorderen Leitungsabschnitt 5 auf, der zweilagig übereinander als Mehrfachwicklung 10 in einer ersten Ebene auf dem Trommelmantel 8 aufgewickelt ist.

Innerhalb des Trommelmantels 8 ist die Trommelscheibe 2 beidseitig konkav ausgeformt und nimmt auf der Seite des Gehäusedeckels 19 in einer zweiten Ebene, ebenfalls zweilagig ineinander gewickelt, den hinteren Leitungsabschnitt 7 auf. Der vordere Leitungsabschnitt 5 des Leitungsspeichers befindet sich in der Darstellung der Figur 3 in einem weitgehend aufgewickelten Zustand. Während des Herausziehens des vorderen Leitungsabschnitts 5 und einer daraus resultierenden Drehbewegung der Trommelscheibe 2 wandern die Windungen der spiralartig aufgewickelten hinteren Leitungsabschnitts 7 nach innen. Bei einem vollständig herausgezogenen vorderen Leitungsabschnitt 7 befinden sich auf der Trommelscheibe 2 drei bis vier Umschlingungen, von denen die innen liegende an einer Trommelhülse 29 zur Anlage kommen kann.

Auf der Seite der Gehäusewanne 20 ist unterhalb der Trommelscheibe 2 ein Federraum 15 ausgebildet, in welchem koaxial zu der Trommelscheibe 2 ein Federelement 3 angeordnet ist. Bei dem Federelement 3 handelt es sich um eine Spiralfeder, die mit einem Ende ortsfest an dem Gehäuse 1 und dem gegenüberliegenden Ende an der Trommelscheibe 2 befestigt ist und für eine definierte Rückstellkraft der Trommelscheibe 2 sorgt.

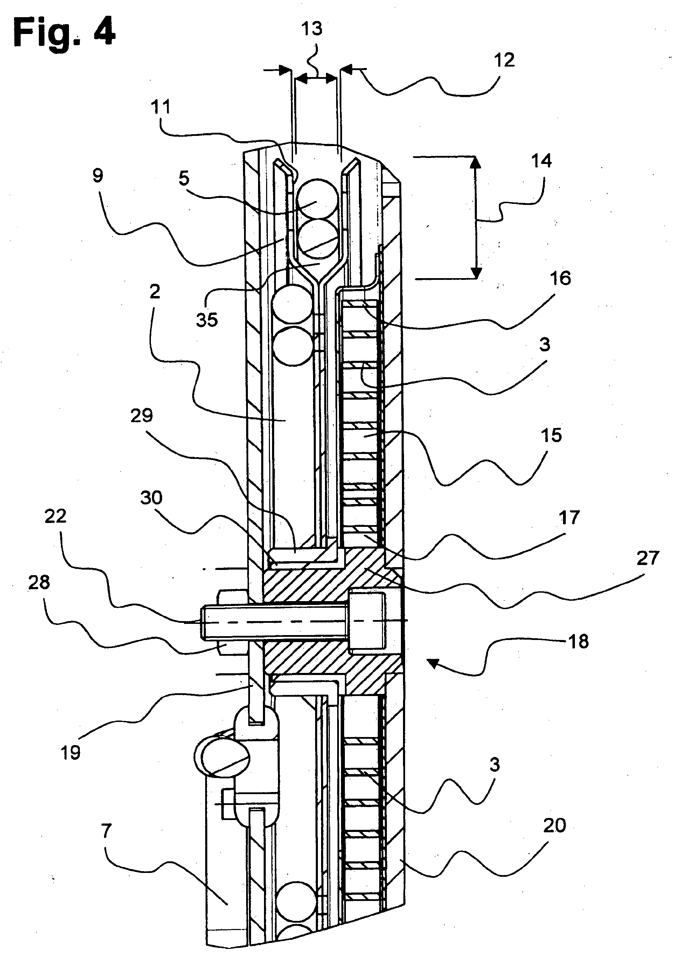

Die Figur 4 stellt einen vergrößerten Ausschnitt des in Figur 3 mit Z gekennzeichneten Bereiches dar. Hierbei ist die Trommelscheibe 2 zu erkennen, die zentrisch in einem Domlager 18 gelagert ist, welches sich zwischen der Gehäusewanne 20 und dem Gehäusedeckel 19 erstreckt. Ein wesentliches Bauteil des Domlagers 18 ist ein Lagersockel 27, durch den eine Halteschraube 22 gesteckt ist. Mit Hilfe einer von der Seite des Gehäusedeckels 19 aufgeschraubten Mutter 28 wird der Gehäusedeckel 19 und die Gehäusewanne 20 gegeneinander verschraubt, wodurch das Gehäuse (s. Fig. 3) eine hohe Stabilität erfährt.

Gleichzeitig dient der Lagersockel 27 als stehendes Widerlager für die um den Lagersockel 27 rotierende Trommelscheibe 2. Für einen verschleißarmen Betrieb und eine günstige Lasteinleitung ist zentrisch in der Trommelscheibe 2 die Trommelhülse 29 eingesetzt und in diese wiederum ein Gleitlager 30 eingepresst. Das Gleitlager 30 dreht demzufolge zusammen mit der Trommelscheibe 2 um den stehenden Lagersockel 27.

Darüber hinaus ist in der Figur 4 die Ausbildung des Trommelmantels 8 verdeutlicht. Das Rillenprofil 11 ist als U-Profil ausgeformt und an dem radial äußeren Ende zur Aufnahme des vorderen Leitungsabschnitts 5 geöffnet. Dabei weist das U-Profil zwei parallele Schenkel auf, die sich mit einer Öffnungsweite 12 gegenüberstehen. Die Öffnungsweite 12 ist nur geringfügig größer gewählt als der Durchmesser 13 der Versorgungsleitung 4. In dem Bereich des Profiltiefsten 35 laufen die beiden Schenkel des U-Profils konisch zusammen. Die gesamte Tiefe 14 des Rillenprofils 11 erstreckt sich vom äußeren Rand des Trommelmantels 8 bis zum Profiltiefsten 35, wobei im Wesentlichen der Abschnitt der parallel zueinander stehenden Schenkel des U-Profils für die Aufnahme des vorderen Leitungsabschnitts 5 geeignet ist und mindestens eine Tiefe zur Aufnahme von zwei übereinander liegenden Wicklungen des vorderen Leitungsabschnitts 5 aufweisen sollte.

Die Figur 5 zeigt einen anderen Querschnitt durch den Leitungsspeicher gemäß der Schnittlinie C-C in Figur 2. Hierbei ist die Abführung des hinteren Leitungsabschnitts 7 aus dem Gehäuse 1 zu erkennen. Diese wird nach dem in Figur 5 nicht dargestellten Austritt durch die Gehäusedurchführung 25 (s. Figur 3) auf der Oberseite 36 des Gehäusedeckels 19 in Richtung der Hinterseite 33 geführt. Hierzu ist zur ortsfesten Fixierung des hinteren Leitungsabschnitts 7 auf der Oberseite 36 an dem Gehäusedeckel 19 die Halteschelle 26 angebracht.

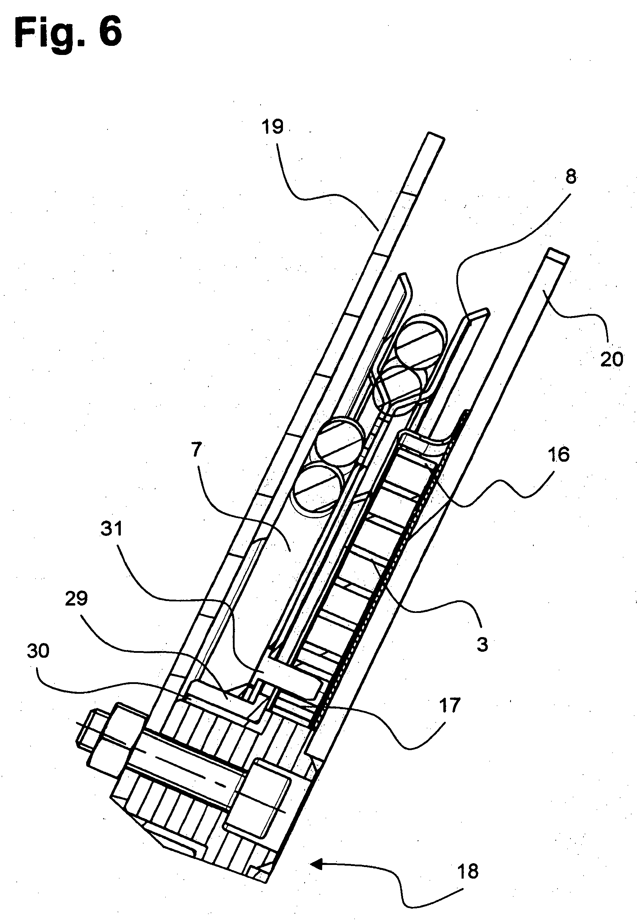

In der Figur 6 ist ausschnittsweise der Leitungsspeicher in der Ansicht der Figur 5 vergrößert dargestellt. Besonders gut ist darin die Befestigung des als Spiralfeder geformten Federelementes 3 an der Trommelscheibe 2 mittels eines Stiftes 31 zu erkennen. Die Spiralfeder 3 hintergreift mit ihrem zweiten Ende 17 den Stift 31 und ist mit ihrem ersten Ende 16 an der Gehäusewanne 20 befestigt.

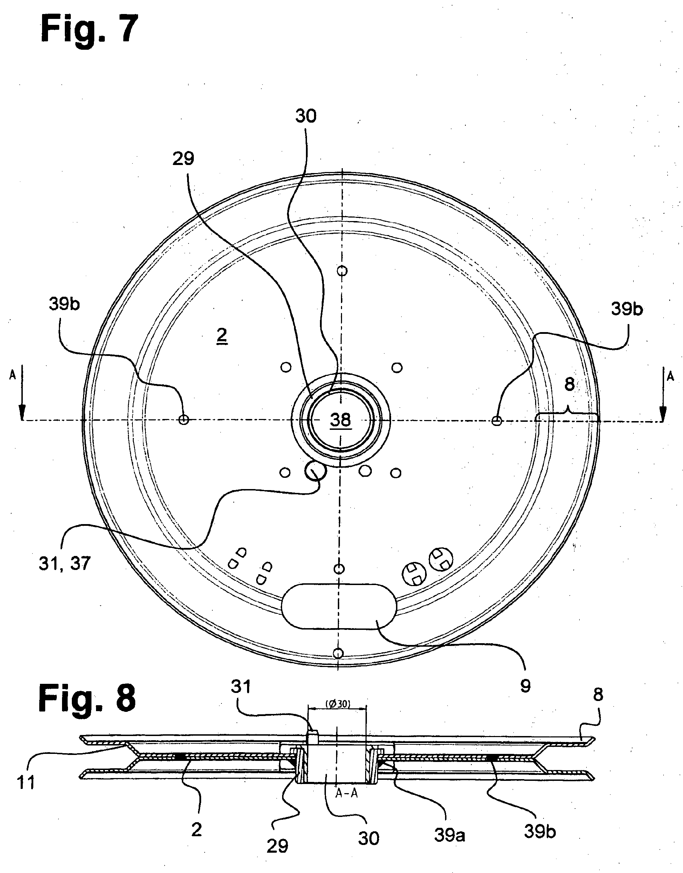

Die Figur 7 stellt eine Draufsicht ausschließlich auf eine Trommelscheibe 2 dar. Zentrisch befindet sich in der Trommelscheibe 2 eine Mittenbohrung 38 zur Aufnahme des Domlagers 18 (s. Figur 4). Die Mittelbohrung 38 ist vollumfänglich von dem Gleitlager 30 umgeben, welches in die einstückig mit der Trommelscheibe 2 verbundene Trommelhülse 29 eingepresst ist. In unmittelbarer Nähe zu der Trommelhülse 29 weist die Trommelscheibe 2 eine weitere Bohrung auf, die als Stiftaufnahme 37 den Stift 31 zum Fixieren der Spiralfeder 3 aufnimmt. Im Randbereich der Trommelscheibe 2 ist ferner der Trommelmantel 8 angedeutet.

In der Figur 8 ist die Trommelscheibe 2 in einem Querschnitt entsprechend der Schnittlinie A-A in Figur 7 gezeigt. Die Figur 8 verdeutlicht den symmetrischen Aufbau der Trommelscheibe 2 aus zwei schalenartigen Hälften, die über einzelne Schweißpunkte 39b (s. auch Figur 7) stoffschlüssig miteinander verbunden sind. Die Trommelhülse 29 ist ebenfalls mit einer umlaufenden Schweißnaht 39a mit der Trommelscheibe 2 fest verbunden. In der Figur 8 tritt der Stift 31 gegenüber der Trommelscheibe 2 und dem Trommelmantel 8 hervor.

### Bezugszeichenliste

- 1: Gehäuse
- 2: Trommelscheibe
- 3: Federelement, Spiralfeder
- 4: Versorgungsleitung
- 5: Vorderer Leitungsabschnitt
- 6: Steckerkeil
- 7: Hinterer Leitungsabschnitt
- 8: Trommelmantel
- 9a, 9b: Manteldurchbruch
- 10: Mehrfachwicklung
- 11: Rillenprofil
- 12: Öffnungsweite Rillenprofil
- 13: Durchmesser Versorgungsleitung
- 14: Tiefe Rillenprofil, Profiltiefe
- 15: Federraum
- 16: erstes Ende Spiralfeder
- 17: zweites Ende Spiralfeder
- 18: Domlager
- 19: Gehäusedeckel
- 20: Gehäusewanne
- 21: Befestigungslöcher
- 22: Halteschraube
- 23: Leitungsbefestigung
- 24: Gummimuffe
- 25: Gehäusedurchführung
- 26: Halteschelle
- 27: Lagersockel
- 28: Mutter
- 29: Trommelhülse
- 30: Gleitlager
- 31: Stift
- 32: Vorderseite Gehäuse
- 33: Hinterseite Gehäuse
- 34: Ausschwenkstellung
- 35: Profiltiefstes
- 36: Oberseite Gehäusedeckel
- 37: Stiftaufnahme
- 38: Mittelbohrung
- 39a: Schweißnaht
- 39b: Schweißpunkte

## Patentansprüche

1. Anordnung eines Leitungsspeichers für eine Versorgungsleitung (4) an einem Nutzfahrzeug, wobei der Leitungsspeicher ein Gehäuse (1) und eine in dem Gehäuse (1) drehbar gelagerte Trommelscheibe (2) umfasst, und die Trommelscheibe (2) zur Aufnahme der Versorgungsleitung (4) über ein Federelement (3) vorgespannt ist, und wobei die Versorgungsleitung (4) mit ihrem vorderen Leitungsabschnitt (5) an dem Steckerkeil (6) angreift, und sich die Versorgungsleitung (4) einstückig durchgehend von dem Steckerkeil (6) bis zum Verlassen des Gehäuses (1) oder zu den Verbrauchern des Sattelaufliegers erstreckt
**dadurch gekennzeichnet,**
**dass** der Leitungsspeicher an einem Sattelauflieger mit einem Königszapfen und einem an dem Königszapfen schwenkbar gelagerten Steckerkeil (6) angeordnet ist, und die Versorgungsleitung mit ihrem hinteren Leitungsabschnitt (7) ortsfest aus dem Gehäuse (1) herausgeführt ist

2. Anordnung nach Anspruch 1, **dadurch gekennzeichnet, dass** an dem radial äußeren Ende der Trommelscheibe (2) ein Trommelmantel (8) ausgeformt ist, auf den der vordere Leitungsabschnitt (5) aufgelegt ist.

3. Anordnung nach Anspruch 1 oder 2, **dadurch gekennzeichnet, dass** der hintere Leitungsabschnitt (7) spiralartig auf die Trommelscheibe (2) gelegt ist.

4. Anordnung nach Anspruch 2 oder 3, **dadurch gekennzeichnet, dass** der Trommelmantel (8) einen Manteldurchbruch (9) aufweist.

5. Anordnung nach Anspruch 4, **dadurch gekennzeichnet, dass** die Versorgungsleitung (4) an dem Manteldurchbruch (9) ortsfest an der Trommelscheibe (2) und/oder dem Trommelmantel (8) befestigt ist.

6. Anordnung nach einem der Ansprüche 2 bis 5, **dadurch gekennzeichnet, dass** der vordere Leitungsabschnitt (5) als Mehrfachwicklung (10) auf den Trommelmantel (8) aufgelegt ist.

7. Anordnung nach einem der Ansprüche 2 bis 6, **dadurch gekennzeichnet, dass** der Trommelmantel (8) in Umfangsrichtung vollständig die Trommelscheibe (2) umgibt.

8. Anordnung nach einem der Ansprüche 2 bis 7, **dadurch gekennzeichnet, dass** der Trommelmantel (8) als Rillenprofil (11) ausgebildet ist.

9. Anordnung nach Anspruch 8, **dadurch gekennzeichnet, dass** das Rillenprofil (11) ein U-Profil ist.

10. Anordnung nach Anspruch 8 oder 9, **dadurch gekennzeichnet, dass** das Rillenprofil (11) oder das U-Profil eine Öffnungsweite (12) aufweist, die geringfügig größer als der Durchmesser (13) der Versorgungsleitung (4) gewählt ist.

11. Anordnung nach einem der Ansprüche 8 bis 10, **dadurch gekennzeichnet, dass** das Rillenprofil (11) oder das U-Profil eine Tiefe (14) aufweist, die mindestens dem doppelten Durchmesser (13) der Versorgungsleitung (4) entspricht.

12. Anordnung nach einem der Ansprüche 1 bis 11, **dadurch gekennzeichnet, dass** das Federelement (3) eine Spiralfeder ist.

13. Anordnung nach Anspruch 12, **dadurch gekennzeichnet, dass** die Spiralfeder (3) in einem Federraum (15) angeordnet ist, der von der Versorgungsleitung (4) durch die Trommelscheibe (2) abgegrenzt ist.

14. Anordnung nach Anspruch 12 oder 13, **dadurch gekennzeichnet, dass** die Spiralfeder (3) mit ihrem ersten Ende (16) ortsfest an dem Gehäuse (1) befestigt ist und mit ihrem zweiten Ende (17) an der Trommelscheibe (2) und/oder dem Trommelmantel (8) angreift.

15. Anordnung nach Anspruch 14, **dadurch gekennzeichnet, dass** das erste Ende (16) in radialer Richtung außen an dem Gehäuse (1) befestigt ist und das zweite Ende (17) innen an der Trommelscheibe (2) angreift.

16. Anordnung nach einem der Ansprüche 1 bis 15, **dadurch gekennzeichnet, dass** die Trommelscheibe (2) an einem ortsfest in dem Gehäuse (1) stehenden Domlager (18) gelagert ist.

## Claims

1. Arrangement of a line storage means for a supply line (4) on a commercial vehicle, wherein the line storage means comprises a housing (1) and a drum disc (2) rotatably mounted in the housing (1), and the drum disc (2) is pretensioned by way of a spring element (3) to take up the supply line (4), and wherein the supply line engages with the wedge-shaped connector (6) with its forward line portion (5), and the supply line (4) extends continuously in one piece from the wedge-shaped connector (6) until it leaves the housing (1) or to the consumers of the semi-trailer,
**characterised in that**
the line storage means is arranged on a semi-trailer having a kingpin and a wedge-shaped connector (6) which is pivotably mounted on the kingpin, and the supply line is fixedly guided out of the housing (1) with its rear line portion (7).

2. Arrangement according to claim 1, **characterised in that** there is formed on the radial outer end of the drum disc (2) a drum casing (8) onto which the forward line portion (5) is placed.

3. Arrangement according to claim 1 or 2, **characterised in that** the rear line portion (7) is placed on the drum disc (2) in a spiral.

4. Arrangement according to claim 2 or 3, **characterised in that** the drum casing (8) has a casing aperture (9).

5. Arrangement according to claim 4, **characterised in that** the supply line (4) is fixedly fastened to the drum disc (2) and/or the drum casing (8) at the casing aperture (9).

6. Arrangement according to any one of claims 2 to 5, **characterised in that** the forward line portion (5) is placed on the drum casing (8) in the form of a multiple winding (10).

7. Arrangement according to any one of claims 2 to 6, **characterised in that** the drum casing (8) encloses the drum disc (2) completely in the circumferential direction.

8. Arrangement according to any one of claims 2 to 7, **characterised in that** the drum casing (8) is in the form of a groove profile (11).

9. Arrangement according to claim 8, **characterised in that** the groove profile (11) is a U-shaped profile.

10. Arrangement according to claim 8 or 9, **characterised in that** the groove profile (11) or the U-shaped profile has an opening width (12) which is chosen to be slightly larger than the diameter (13) of the supply line (4).

11. Arrangement according to any one of claims 8 to 10, **characterised in that** the groove profile (11) or the U-shaped profile has a depth (14) which corresponds to at least twice the diameter (13) of the supply line (4).

12. Arrangement according to any one of claims 1 to 11, **characterised in that** the spring element (3) is a flat spiral spring.

13. Arrangement according to claim 12, **characterised in that** the flat spiral spring (3) is arranged in a spring space (15) which is delimited from the supply line (4) by the drum disc (2).

14. Arrangement according to claim 12 or 13, **characterised in that** the flat spiral spring (3) is fixedly fastened to the housing (1) by its first end (16) and engages the drum disc (2) and/or the drum casing (8) with its second end (17).

15. Arrangement according to claim 14, **characterised in that** the first end (16) is fastened to the outside of the housing (1) in the radial direction and the second end (17) engages the drum disc (2) on the inside.

16. Arrangement according to any one of claims 1 to 15, **characterised in that** the drum disc (2) is mounted on a mandrel bearing (18) which is fixedly arranged in the housing (1).

## Revendications

1. Agencement d'un dispositif de stockage de câble pour un câble d'alimentation (4) sur un véhicule utilitaire, sachant que le dispositif de stockage de câble comprend un boîtier (1) et un disque de tambour (2) monté à rotation dans le boîtier (1), et que le disque de tambour (2) est précontraint au moyen d'un élément formant ressort (3) pour recevoir le câble d'alimentation (4), et sachant que le câble d'alimentation (4) engage la clavette de connecteur (6) par son tronçon de câble avant (5), et que le câble d'alimentation (4) s'étend continûment d'un seul tenant depuis la clavette de connecteur (6) jusqu'à sa sortie du boîtier (1) ou jusqu'aux consommateurs électriques de la semi-remorque,
**caractérisé en ce que** le dispositif de stockage de câble est disposé sur une semi-remorque pourvue d'un pivot d'attelage et d'une clavette de connecteur (6) montée à pivotement sur le pivot d'attelage, et le câble d'alimentation est dirigé en position fixe hors du boîtier (1) par son tronçon de câble arrière (7).

2. Agencement selon la revendication 1, **caractérisé en ce qu'**une enveloppe de tambour (8), sur laquelle est posé le tronçon de câble avant (5), est formée à l'extrémité radialement extérieure du disque de tambour (2).

3. Agencement selon la revendication 1 ou 2, **caractérisé en ce que** le tronçon de câble arrière (7) est installé en spirale sur le disque de tambour (2).

4. Agencement selon la revendication 2 ou 3, **caractérisé en ce que** l'enveloppe de tambour (8) présente une ouverture d'enveloppe (9).

5. Agencement selon la revendication 4, **caractérisé en ce que** le câble d'alimentation (4) est fixé en position fixe au niveau de l'ouverture d'enveloppe (9) sur le disque de tambour (2) et/ou l'enveloppe de tambour (8).

6. Agencement selon l'une des revendications 2 à 5, **caractérisé en ce que** le tronçon de câble avant (5) est posé sur l'enveloppe de tambour (8) sous la forme d'un enroulement multiple (10).

7. Agencement selon l'une des revendications 2 à 6, **caractérisé en ce que** l'enveloppe de tambour (8) entoure totalement le disque de tambour (2) en direction circonférentielle.

8. Agencement selon l'une des revendications 2 à 7, **caractérisé en ce que** l'enveloppe de tambour (8) est réalisée sous la forme d'un profil à gorge (11).

9. Agencement selon la revendication 8, **caractérisé en ce que** le profil à gorge (11) est un profil en U.

10. Agencement selon la revendication 8 ou 9, **caractérisé en ce que** le profil à gorge (11) ou le profil en U présente une largeur d'ouverture (12) qui est choisie légèrement supérieure au diamètre (13) du câble d'alimentation (4).

11. Agencement selon l'une des revendications 8 à 10, **caractérisé en ce que** le profil à gorge (11) ou le profil en U présente une profondeur (14) qui correspond au moins au double du diamètre (13) du câble d'alimentation (4).

12. Agencement selon l'une des revendications 1 à 11, **caractérisé en ce que** l'élément formant ressort (3) est un ressort spiral.

13. Agencement selon la revendication 12, **caractérisé en ce que** le ressort spiral (3) est disposé dans une chambre de ressort (15) qui est délimitée par rapport au câble d'alimentation (4) par le disque de tambour (2).

14. Agencement selon la revendication 12 ou 13, **caractérisé en ce que** le ressort spiral (3) est fixé par sa première extrémité (16) en position fixe sur le boîtier (1) et engage par sa deuxième extrémité (17) le disque de tambour (2) et/ou l'enveloppe de tambour (8).

15. Agencement selon la revendication 14, **caractérisé en ce que** la première extrémité (16) est fixée extérieurement en direction radiale sur le boîtier (1), et la deuxième extrémité (17) engage intérieurement le disque de tambour (2).

16. Agencement selon l'une des revendications 1 à 15, **caractérisé en ce que** le disque de tambour (2) est monté sur un palier à broche (18) qui se dresse en position fixe dans le boîtier (1).
